# EUROPÄISCHE PATENTANMELDUNG

(11) **EP 2 511 777 A1**
(43) Veröffentlichungstag der Anmeldung: **17.10.2012**
(21) Anmeldenummer: 11162167.8
(22) Anmeldetag: 13.04.2011
(51) Int. Cl.: G05B 19/042

(54) **Verfahren zum Betrieb einer Antriebssteuerungseinrichtung und Antriebssteuerungseinrichtung mit Mitteln zur Verwendung in einem solchen Verfahren**

(71) Anmelder: SIEMENS AKTIENGESELLSCHAFT, 80333 München (DE)
(72) Erfinder: Pfister, Alexander, 91330 Eggolsheim (DE)

(57) **Zusammenfassung**

Die Erfindung betrifft ein Verfahren zum Betrieb einer Antriebssteuerungseinrichtung (16,18) und eine Antriebssteuerungseinrichtung (16,18) mit Mitteln zur Verwendung in einem solchen Verfahren, wobei die Antriebssteuerungseinrichtung (16,18) zumindest einen Busanschluss und eine Kommunikationsschnittstelle (30) zum Anschluss an einen Bus (20) und zum Versenden und zum Empfangen von Daten über den Bus (20) umfasst, wobei die Antriebssteuerungseinrichtung (16,18) einen Speicher (28) umfasst, in den zumindest eine Basisfunktionalität (32) zumindest zur Steuerung und/oder Regelung eines angeschlossenen oder anschließbaren Motors (22,24) geladen ist, wobei die Antriebssteuerungseinrichtung (16,18) als Bestandteil der Basisfunktionalität (32) eine Softwareschnittstelle (38) umfasst, wobei im Betrieb der Antriebssteuerungseinrichtung (16,18) die Funktionalität eines Webservers (36) in deren Speicher (28) geladen wird, der mit der Basisfunktionalität (32) über die Softwareschnittstelle (38) zusammenwirkt, und wobei über die Kommunikationsschnittstelle (30) eingehende Daten für den Webserver (36) zur Be- oder Verarbeitung an diesen weitergeleitet werden.

## Beschreibung

Die vorliegende Erfindung betrifft ein Verfahren zum Betrieb einer Antriebssteuerungseinrichtung, wobei die Antriebssteuerungseinrichtung zumindest einen Busanschluss und eine Kommunikationsschnittstelle zum Anschluss an einen Bus und zum Versenden und zum Empfangen von Daten über den Bus umfasst.

Derartige Antriebssteuerungseinrichtungen, z.B. zum Anschluss von Elektromotoren, sind an sich bekannt. Die Leistungsfähigkeit und der Funktionsumfang solcher Antriebssteuerungseinrichtungen hat sich in den letzten Jahren stetig erhöht, so dass eine Vielzahl von zusätzlichen Funktionen über z.B. eine Frequenzumrichtung, eine Geschwindigkeits- oder Drehzahlregelung hinaus von solchen Antriebssteuerungseinrichtungen angeboten werden. Ein Beispiel einer derartigen zusätzlichen Funktionalität ist die Möglichkeit, solche Antriebssteuerungseinrichtungen an einen Bus, z.B. einen Feldbus oder dergleichen, anzuschließen und die Antriebssteuerungseinrichtung damit, zusammen mit weiteren Kommunikationsteilnehmern, zu einem Automatisierungssystem zusammenzuschließen, in dem jeder Kommunikationsteilnehmer, also auch die Antriebssteuerungseinrichtung, erreichbar ist. Bei einer solchen Erreichbarkeit der Antriebssteuerungseinrichtung über einen Bus besteht die Möglichkeit, die Antriebssteuerungseinrichtung zentral zu konfigurieren oder zu parametrieren. Des Weiteren besteht auch die Möglichkeit, einen Status der Antriebssteuerungseinrichtung von einer zentralen Stelle aus abzufragen und/oder kontinuierlich zu überwachen.

Zur Verbesserung einer Bedienbarkeit solcher Maßnahmen durch einen Benutzer, der auf die jeweilige Antriebssteuerungseinrichtung nicht direkt, sondern von einer zentralen Stelle aus, z.B. einer Leitstation oder dergleichen, zugreift, ist in der Vergangenheit in Betracht gezogen worden, die Funktionalität sogenannter Webserver auf Antriebssteuerungseinrichtungen der oben skizzierten Art vorzusehen. Ein solcher Webserver verwaltet zumindest eine vorgegebene oder vorgebbare Webseite und in dieser kann eine Darstellung z.B. von System-oder Betriebsparametern der Antriebssteuerungseinrichtung und/oder momentaner Messwerte in Zusammenhang mit einem Betrieb der Antriebssteuerungseinrichtung zusammengefasst sein. Als momentane Messwerte kommt z.B. eine momentane Drehzahl eines angeschlossenen Motors in Betracht. Im Ergebnis erfolgt bei Aufruf der entsprechenden Webseite für den Benutzer eine übersichtliche Darstellung der von der Webseite jeweils umfassten Daten. Die Funktionalität als Webserver bewirkt, dass auf einfache Art und Weise Daten und erläuternde Texte in einer ansprechenden Formatierung zusammengestellt sind oder werden können und dass solche Informationen bei einer anfragenden Station, im hier gewählten Beispiel z.B. der Leitstation als die auf den Webserver der Antriebssteuerungseinrichtung zugreifende Einheit, dargestellt werden.

Auch wenn dieser zusätzliche Funktionsumfang von Antriebssteuerungseinrichtungen äußerst nützlich und hilfreich ist, steht der Bereitstellung einer solchen Funktionalität in der Antriebssteuerungseinrichtung jedoch entgegen, dass eine solche Funktionalität einerseits Speicherplatz in einem Speicher der Antriebssteuerungseinrichtung belegt und andererseits im Betrieb der Antriebssteuerungseinrichtung weitere Ressourcen belegt, nämlich zum einen Rechenzeit kostet und zum anderen die Menge der in einer Zeiteinheit über den Bus von und zur Antriebssteuerungseinrichtung übertragbaren Daten reduziert, wenn in der Zeiteinheit auch ein Zugriff auf den von der Antriebssteuerungseinrichtung umfassten Webserver erfolgt.

Eine Aufgabe der vorliegenden Erfindung besteht entsprechend darin, ein Verfahren zum Betrieb einer Antriebssteuerungseinrichtung und eine in einem solchen Verfahren verwendbare Antriebssteuerungseinrichtung anzugeben, bei dem bzw. bei der die oben genannten Nachteile vermieden werden oder zumindest hinsichtlich ihrer Auswirkungen reduziert sind.

Diese Aufgabe wird hinsichtlich des Verfahrens erfindungsgemäß mit den Merkmalen des Anspruchs 1 gelöst. Dazu ist bei einem Verfahren zum Betrieb einer Antriebssteuerungseinrichtung der eingangs genannten Art vorgesehen, dass die Antriebssteuerungseinrichtung einen Speicher umfasst, in den zumindest eine Basisfunktionalität - ein sogenannter Kernel - zumindest zur Steuerung und/oder Regelung eines angeschlossenen oder anschließbaren Motors geladen ist, dass die Antriebssteuerungseinrichtung als Bestandteil der Basisfunktionalität eine Softwareschnittstelle umfasst, dass im Betrieb der Antriebssteuerungseinrichtung in deren Speicher die Funktionalität eines Webservers geladen wird, der mit der Basisfunktionalität über die Softwareschnittstelle zusammenwirkt und dass über die Kommunikationsschnittstelle eingehende Daten für den Webserver zur Be- oder Verarbeitung an diesen weitergeleitet werden.

Die oben genannte Aufgabe wird ebenfalls mit einer Antriebssteuerungseinrichtung mit Mitteln zur Verwendung in einem solchen Verfahren und/oder seinen nachfolgend beschriebenen Ausgestaltungen gelöst. Dafür ist vorgesehen, dass die Antriebssteuerungseinrichtung als Mittel zur Verwendung in einem solchen Verfahren oder in solchen Verfahren einen Busanschluss und eine Kommunikationsschnittstelle zum Anschluss an einen Bus und zum Versenden und Empfangen von Daten über den Bus, einen Speicher und eine in den Speicher ladbare Basisfunktionalität (Kernel) zumindest zur Steuerung und/oder Regelung eines anschließbaren Motors sowie als Bestandteil der Basisfunktionalität eine Softwareschnittstelle, mittels derer die Funktionalität eines Webservers nachladbar mit der Basisfunktionalität kombinierbar ist, umfasst.

Der Vorteil der Erfindung besteht darin, dass die Funktionalität eines Webservers für eine Antriebssteuerungseinrichtung verfügbar bleibt, ohne diese permanent im Speicher der Antriebssteuerungseinrichtung vorhalten zu müssen. Es wird also - kurz gefasst - eine Antriebssteuerungseinrichtung und ein Verfahren zum Betrieb einer Antriebssteuerungseinrichtung mit einem nachladbaren Webserver vorgeschlagen. Zu diesem Zweck ist vorgesehen, dass eine im Speicher der Antriebssteuerungseinrichtung stets benötigte Basisfunktionalität - der sogenannte Kernel - eine Softwareschnittstelle umfasst oder auf eine solche Zugriff hat, mittels derer die Funktionalität eines Webservers nachladbar mit der Basisfunktionalität kombinierbar ist. Im Betrieb der Antriebssteuerungseinrichtung wirkt der Webserver mit der Basisfunktionalität über diese Softwareschnittstelle zusammen. Über die Kommunikationsschnittstelle eingehende Daten, also von extern eingehende Daten, für den Webserver werden zur Be- oder Verarbeitung an diesen weitergeleitet. Der Webserver wird also mit dem Laden in den Speicher der Antriebssteuerungseinrichtung zumindest temporär Bestandteil der dortigen Funktionalität und ergänzt insoweit die Funktionalität des Kernels um die Funktionalität eines Webservers.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn der Webserver als nachladbare Funktionalität für die Antriebssteuerungseinrichtung eine Eingangs- und eine Ausgangsschnittstelle umfasst, wobei beim Laden des Webservers in den Speicher der Antriebssteuerungseinrichtung die Eingangsschnittstelle des Webservers mit der Kommunikationsschnittstelle der Antriebssteuerungseinrichtung und die Ausgangsschnittstelle des Webservers mit der Softwareschnittstelle der Antriebssteuerungseinrichtung verbindbar sind oder verbunden werden, ist unmittelbar mit dem Laden des Webservers in den Speicher und dem damit im Zusammenhang stehenden Verbinden der Schnittstellen die Funktionalität des Webservers gewährleistet. Dies ergibt sich, indem der Webserver einerseits auf eingehende Daten, normalerweise Abfragen, reagieren und selbst Daten der Antriebssteuerungseinrichtung über deren Basisfunktionalität abfragen kann. Aufgrund seiner Anbindung über seine Eingangsschnittstelle an die Kommunikationsschnittstelle der Antriebssteuerungseinrichtung kann der Webserver auf eingehende Daten, also Sendungen für den Webserver, reagieren. Aufgrund seiner Anbindung über seine Ausgangsschnittstelle und die Softwareschnittstelle der Antriebssteuerungseinrichtung an die Basisfunktionalität (Kernel) der Antriebssteuerungseinrichtung ist für den Webserver ein Zugriff auf deren Daten möglich, so dass vom Webserver bereitgestellte Webseiten mit aktuellen Daten gefüllt werden können. Im Ergebnis ist für eine entfernte Station eine Abfrage von Statuswerten und dergleichen über den Webserver möglich.

Eine Antriebssteuerungseinrichtung mit Mitteln zur Verwendung in einem solchen Verfahren weist insbesondere ein Computerprogramm mit Programmcodemitteln zum Verbinden einer Eingangsschnittstelle eines in einen Speicher einer Antriebssteuerungseinrichtung geladenen Webservers mit einer Kommunikationsschnittstelle der Antriebssteuerungseinrichtung und zum Verbinden einer Ausgangsschnittstelle des Webservers mit einer Softwareschnittstelle zu einer Basisfunktionalität der Antriebssteuerungseinrichtung auf. Das Computerprogramm kommt dabei als Funktionalität, also z.B. als Unterprogramm oder als Modul des Kernels, in Betracht. Beim Laden des Webservers in den Speicher wird diese Funktionalität automatisch aufgerufen und im Weiteren wird automatisch die Verbindung zwischen den genannten Schnittstellen, bei denen es sich um Software-Schnittstellen handelt, hergestellt, so dass der in den Speicher geladene Webserver einerseits mit der Kommunikationsschnittstelle und andererseits über die Softwareschnittstelle mit dem Kernel verbunden ist.

Insoweit ist in einer Ausführungsform des Verfahrens vorgesehen, dass das Verbinden der Eingangsschnittstelle mit der Kommunikationsschnittstelle und/oder das Verbinden der Ausgangsschnittstelle mit der Softwareschnittstelle automatisch im Zusammenhang mit dem Laden des Webservers in den Speicher der Antriebssteuerungseinrichtung erfolgt. Dazu ist z.B. vorgesehen, dass das Laden eines Webservers in den Speicher der Antriebssteuerungseinrichtung eine entsprechende Anmeldung bei der Basisfunktionalität der Antriebssteuerungseinrichtung erfordert, woraufhin diese entsprechenden Speicherplatz im Speicher freigibt und/oder eine Startadresse im Speicher herausgibt, an der der Webserver gespeichert werden kann oder im Zusammenhang mit der Ladeanforderung bereits gespeichert ist. Insoweit kann die Basisfunktionalität dann das Laden des Webservers in den Speicher weiter überwachen und kann mit Verfügbarkeit des Webservers im Speicher automatisch die Verbindung der genannten Schnittstellen bewirken.

Im Betrieb der Antriebssteuerungseinrichtung mit geladenem nachladbaren Webserver werden über die Kommunikationsschnittstelle eingehende Daten für den Webserver an diesen über dessen Eingangsschnittstelle zur Be- oder Verarbeitung weitergeleitet und der Webserver greift über seine Ausgangsschnittstelle bedarfsweise auf die Basisfunktionalität der Antriebssteuerungseinrichtung zu, um z.B. Betriebsparameter der Antriebssteuerungseinrichtung auszulesen oder zu verändern oder Statusinformationen der Antriebssteuerungseinrichtung und/oder eines angeschlossenen Motors auszulesen.

Bei einer Ausführungsform des Verfahrens ist vorgesehen, dass zum Deaktivieren eines in den Speicher der Antriebssteuerungseinrichtung geladenen Webservers die Verbindung zwischen Eingangsschnittstelle und Kommunikationsschnittstelle einerseits und Ausgangsschnittstelle und Softwareschnittstelle andererseits getrennt wird und der vom Webserver im Speicher belegte Speicherplatz zumindest als verfügbar markiert wird. Bereits mit der Auftrennung der Verbindung zwischen den einzelnen Schnittstellen tritt der Webserver nach außen nicht mehr in Erscheinung. Der Webserver benötigt also keine Rechenleistung der Antriebssteuerungseinrichtung mehr. Indem der vom Webserver im Speicher belegte Speicherplatz auch als verfügbar markiert wird, steht dieser Speicherplatz für andere nachladbare Funktionen zur Verfügung, deren Nachladen nach dem gleichen Prinzip wie das Nachladen des Webservers erfolgen kann, indem dafür die Basisfunktionalität und dessen Softwareschnittstelle genutzt wird.

Soweit das Verfahren in Software implementiert ist oder implementierbar ist, ist die Erfindung damit einerseits auch ein Computerprogramm mit durch einen Computer ausführbaren Programmcodeanweisungen und andererseits ein Speichermedium mit einem derartigen Computerprogramm sowie schließlich auch eine Antriebssteuerungseinrichtung, in deren Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Automatisierungssystem mit einer Antriebssteuerungseinrichtung,
- FIG 2: Details zu einer Antriebssteuerungseinrichtung gemäß der Erfindung,
- FIG 3: Details zu einem in einen Speicher der Antriebssteuerungseinrichtung gemäß FIG 2 ladbaren Webserver,
- FIG 4: eine vereinfachte Darstellung eines Algorithmus zum Laden eines Webservers oder einer sonstigen Softwarefunktionalität in einen Speicher einer Antriebssteuerungseinrichtung und
- FIG 5: eine vereinfachte Darstellung eines Speichermediums mit einem Webserver und Webseiten zum Laden in einen Speicher einer Antriebssteuerungseinrichtung.

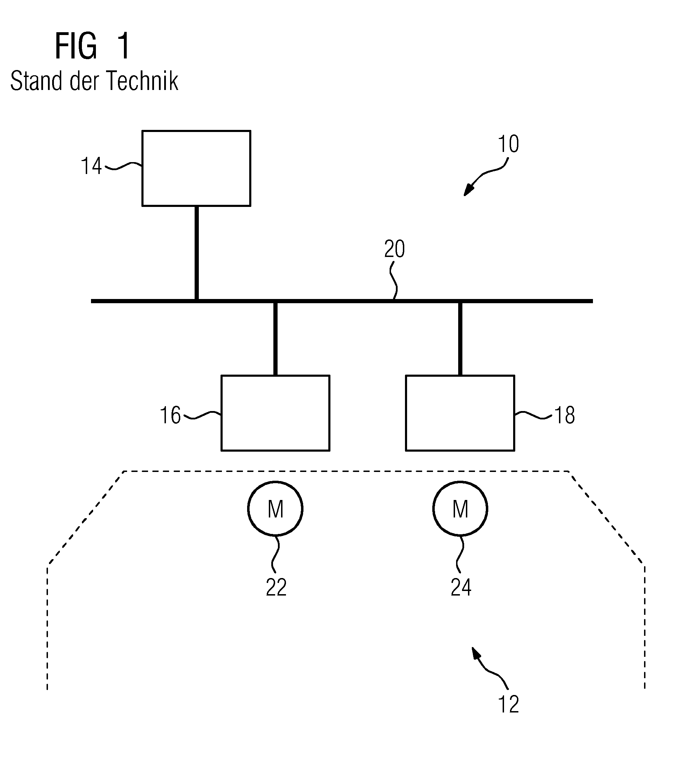

FIG 1 zeigt schematisch stark vereinfacht ein insgesamt mit 10 bezeichnetes Automatisierungssystem, das einen nicht näher dargestellten industriellen technischen Prozess 12, z.B. einen Produktionsprozess steuert und/oder überwacht. Das Automatisierungssystem 10 umfasst eine Mehrzahl von Automatisierungsgeräten 14, 16, 18, die miteinander über einen Bus 20 kommunikativ verbunden sind. Bei den Automatisierungsgeräten 14, 16, 18 handelt es sich z.B. um eine Leitstation 14 (beispielsweise eine speicherprogrammierbare Steuerung) und eine erste und eine zweite Antriebssteuerungseinrichtung 16, 18, die jeweils einen im technischen Prozess 12 befindlichen Motor 22, 24 steuern und/oder überwachen.

Zur Konfiguration solcher Antriebssteuerungseinrichtungen 16, 18 ist ein sogenannter Webserver an sich bekannt. Solche Webserver sind in einem Speicher der jeweiligen Antriebssteuerungseinrichtung 16, 18 implementiert, so dass eine Leitstation 14 über den Bus 20 auf die Antriebssteuerungseinrichtung 16, 18 und den dortigen Webserver zugreifen kann. Der Zugriff auf den Webserver ermöglicht in an sich bekannter Art und Weise eine Darstellung von Statuswerten für die jeweilige Antriebssteuerungseinrichtung 16, 18 und/oder den angeschlossenen Motor 22, 24. Des Weiteren ermöglicht der Webserver eine Konfiguration der Antriebssteuerungseinrichtung 16, 18, z.B. durch Vorgabe von Geschwindigkeits- oder Drehzahlsollwerten, durch Vorgabe von Regelungsparametern, usw.

In Bezug auf einen von einer Antriebssteuerungseinrichtung 16, 18 umfassten Webserver fungiert ein darauf zugreifendes Automatisierungsgerät 14, z.B. die Leitstation 14, wie ein Webclient, indem das jeweilige Automatisierungsgerät 14 eine Funktionalität für einen Webclient umfasst oder bereitstellt, z.B. in Form eines sogenannten Browsers.

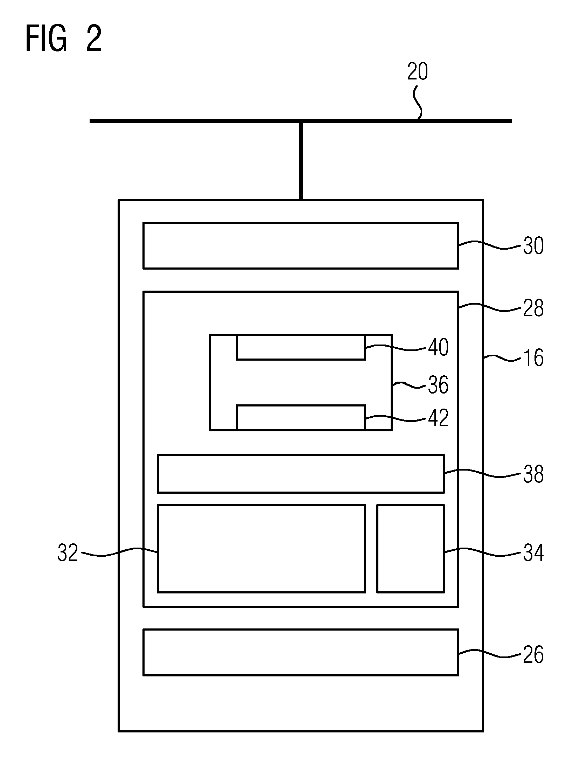

FIG 2 zeigt einen Ausschnitt aus der Situation gemäß FIG 1 und eine der Antriebssteuerungseinrichtungen 16, 18 mit weiteren Details. Danach umfasst jede Antriebssteuerungseinrichtung 16, 18 eine Verarbeitungseinheit 26 nach Art eines Mikroprozessors oder dergleichen. Des Weiteren umfasst jede Antriebssteuerungseinrichtung 16, 18 einen Speicher 28 und eine Kommunikationsschnittstelle 30. In den Speicher 28 ist als sogenannter Kernel eine Basisfunktionalität 32 geladen, die als Computerprogramm mit Computerprogrammanweisungen eine Implementation der von der Antriebssteuerungseinrichtung 16, 18 umfassten Funktionalität zur Steuerung und/oder Überwachung des jeweils angeschlossenen Motors 22, 24 (FIG 1) bereitstellt. Gleichfalls im Speicher 28 befinden sich interne Daten 34 der Antriebssteuerungseinrichtung 16, 18, also z.B. Daten hinsichtlich der Art des angeschlossenen Motors 22, 24, Daten für dessen Steuerung und/oder Überwachung, nämlich z.B. Geschwindigkeitssollwerte, Regelungsparameter, usw.

Bei Antriebssteuerungseinrichtungen 16, 18 mit integriertem Webserver ist dessen Funktionalität ebenfalls im jeweiligen Speicher 28 abgelegt. Der Webserver wird konkurrierend zur oder unter Kontrolle der Basisfunktionalität 32 von der Verarbeitungseinheit 26 ausgeführt. Der Webserver belegt damit Ressourcen der Antriebssteuerungseinrichtung 16, 18, nämlich zumindest Speicherplatz im Speicher 28 und Rechenleistung der Verarbeitungseinheit 26.

Hier wird eine Antriebssteuerungseinrichtung 16, 18 mit einem nachladbaren Webserver 36 vorgeschlagen. Der nachladbare Webserver (im Folgenden kurz nur als Webserver 36 bezeichnet) wird als Computerprogramm mit Computerprogrammanweisungen ebenfalls im Speicher 28 vorgehalten, wenn eine solche Funktionalität in den Speicher 28 geladen ist.

Um einen nachladbaren Webserver 36 im Speicher 28 der Antriebssteuerungseinrichtung 16, 18 ausführbar machen zu können, umfasst die Basisfunktionalität 32 eine Softwareschnittstelle 38 oder der Basisfunktionalität 32 ist eine solche Softwareschnittstelle 38 zugeordnet. Der nachladbare Webserver 36 umfasst seinerseits ebenfalls Schnittstellen, nämlich eine Eingangsschnittstelle 40 und eine Ausgangsschnittstelle 42. Wenn im Betrieb der Antriebssteuerungseinrichtung 16, 18 in deren Speicher 28 die Funktionalität eines Webservers 36 geladen wird, wirkt dieser mit der Basisfunktionalität 32 über die Softwareschnittstelle 38 zusammen bzw. die Basisfunktionalität 32 wirkt mit dem Webserver 36 über die Softwareschnittstelle 38 zusammen. Über die Kommunikationsschnittstelle 30 bei der jeweiligen Antriebssteuerungseinrichtung 16, 18 eingehende Daten für den Webserver 36 werden zur Be- oder Verarbeitung an diesen weitergeleitet. Bei einem Webserver 36 mit einer Ein- und Ausgangsschnittstelle 40, 42 erfolgt beim Laden des Webservers 36 in den Speicher 28 oder im Zusammenhang mit dem Laden in den Speicher 28 eine Verbindung der Eingangsschnittstelle 40 des Webservers 36 mit der Kommunikationsschnittstelle 30 der Antriebssteuerungseinrichtung 16, 18 und eine Verbindung der Ausgangsschnittstelle 42 des nachladbaren Webservers 36 mit der Softwareschnittstelle 38 der Antriebssteuerungseinrichtung 16, 18. Das Verbinden der Eingangsschnittstelle 40 mit der Kommunikationsschnittstelle 30 und/oder das Verbinden der Ausgangsschnittstelle 42 mit der Softwareschnittstelle 38 bewirkt z.B. die Basisfunktionalität 32 automatisch, wenn eine dort vorgesehene Funktion aufgerufen wird, um als nachladbare Funktion im Speicher 28 einen Webserver 36 zu installieren.

Wenn ein nachladbarer Webserver 36 im Speicher 28 einer Antriebssteuerungseinrichtung 16, 18 geladen ist und über seine Ein- und Ausgangsschnittstelle 40, 42 mit der Kommunikationsschnittstelle 30 einerseits und der Softwareschnittstelle 38 andererseits verbunden ist, werden über die Kommunikationsschnittstelle 30 eingehende Daten für den Webserver 36 an diesen über dessen Eingangsschnittstelle 40 zur Be- oder Verarbeitung weitergeleitet und der Webserver 36 greift ggf. über seine Ausgangsschnittstelle 42 auf die Basisfunktionalität 32 der Antriebssteuerungseinrichtung 16, 18 und damit zumindest indirekt auf die Daten 34 zu, so dass durch den Webserver 36 eine formatierte Darstellung solcher Daten zur Benutzerinformation, aber auch eine Möglichkeit zur Beeinflussung einzelner derartiger Daten gegeben ist.

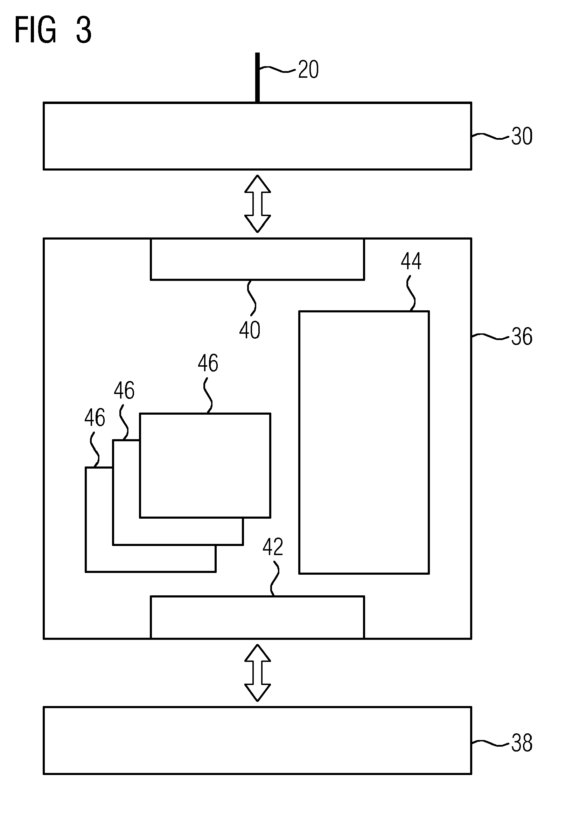

FIG 3 zeigt eine vergrößerte Darstellung der Situation gemäß FIG 2 mit weiteren Details für den Webserver 36. Dargestellt ist, dass der nachladbare Webserver 36 als Computerprogramm mit Programmcodeanweisungen mit durch die Verarbeitungseinheit 26 (FIG 2) ausführbaren Programmcodeanweisungen ein Webserverbasisprogramm 44 und ein oder mehrere Webseiten 46 umfasst. Anstelle von von dem Webserver 36 unmittelbar umfassten Webseiten 46 kann auch vorgesehen sein, dass diese unabhängig vom Webserver 36 im Speicher 28 (FIG 2) der Antriebssteuerungseinrichtung 16, 18 oder in einem entfernten Speicher (nicht dargestellt) vorgehalten werden und für den Webeserver 36 zugreifbar sind. Der Aufbau von Webseiten 46 ist an sich bekannt, so dass hier keine weitere Erläuterung erforderlich ist. Die Funktionalität des Webserverbasisprogramms 44 ist ebenfalls an sich bekannt, so dass auch in dieser Hinsicht weitere Erläuterungen unnötig sind.

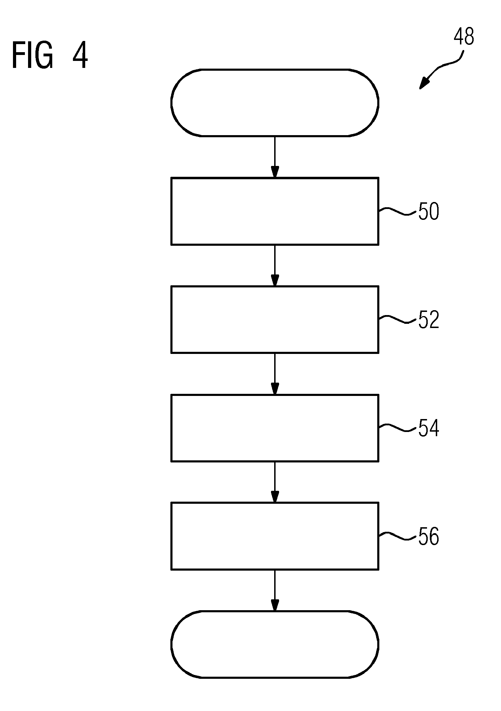

FIG 4 zeigt schließlich schematisch vereinfacht einen Algorithmus für ein Computerprogramm mit Computerprogrammcodeanweisungen zur Ausführung des Verfahrens wie hier beschrieben. Das Computerprogramm kommt als Bestandteil der Basisfunktionalität 32, z.B. in Form eines sogenannten Unterprogramms in Betracht. Das insgesamt mit 48 bezeichnete Computerprogramm beginnt mit einem ersten Funktionsblock 50, mit dem der Wunsch, einen Webserver 36 in den Speicher 28 der Antriebssteuerungseinrichtung 16, 18 zu laden, bei der Basisfunktionalität 32 angemeldet wird und dafür die Funktionalität der Softwareschnittstelle 38 geprüft wird. In einem darauf folgenden zweiten Funktionsblock 52 wird geprüft, ob im Speicher 28 ausreichend freier Speicherplatz zum Laden des Webservers 36 in den Speicher 28 zur Verfügung steht. Mit einem darauf folgenden dritten Funktionsblock 54 wird das Laden des Webservers 36 in den Speicher 28 erlaubt und veranlasst, z.B. indem dafür eine Startadresse im Speicher 28 vorgegeben wird. In einem vierten Funktionsblock 56 werden bei einem Webserver mit einer Ein- und Ausgangsschnittstelle 40, 42 die Eingangsschnittstelle 40 mit der Kommunikationsschnittstelle 30 und die Ausgangsschnittstelle 42 mit der Softwareschnittstelle 38 verbunden. Damit ist das Nachladen eines Webservers 36 in den Speicher 28 einer Antriebssteuerungseinrichtung 16, 18 abgeschlossen. Für den Webserver 36 bei einer Antriebssteuerungseinrichtung 16, 18 über die Kommunikationsschnittstelle 30 eingehende Daten werden aufgrund von deren Verbindung mit der Eingangsschnittstelle 40 des Webservers 36 diesem zugeleitet. Der Webserver seinerseits kann über seine Ausgangsschnittstelle 42 auf die Softwareschnittstelle 38 und von dort auf die Basisfunktionalität 32 und/oder Daten 34 der Antriebssteuerungseinrichtung 16 zugreifen, um Statusabfragen, Parametrierungen, Konfigurationsänderungen, usw. abzuwickeln.

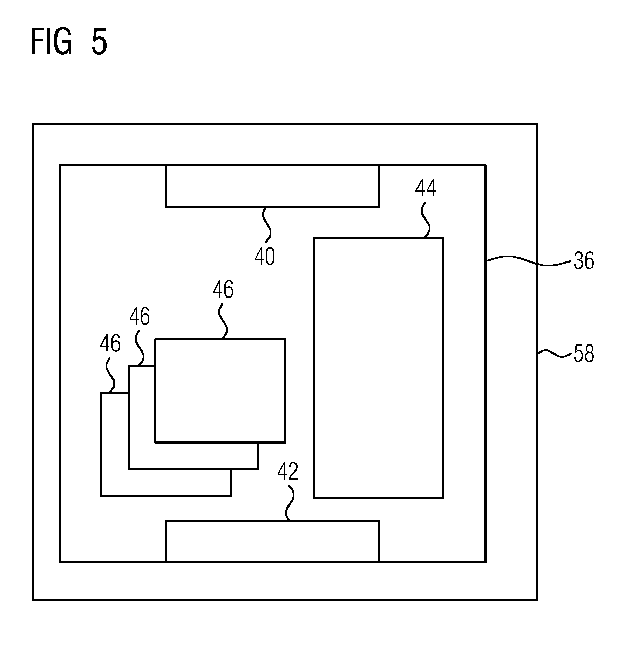

FIG 5 zeigt abschließend schematisch stark vereinfacht einen Datenträger, also z.B. einen elektromagnetischen Datenträger, einen optischen Datenträger, usw. nach Art einer Diskette, einer CD-ROM und dergleichen, mit einem Webserver 36 und davon umfassten Webseiten 46, wie in FIG 3 dargestellt. Durch Kombination eines solchen Datenträgers entweder mittelbar oder unmittelbar, z.B. über einen Bus 20 (FIG 1), mit einer Antriebssteuerungseinrichtung 16, 18 kann die Funktionalität eines Webservers 36 in den dortigen Speicher 28 geladen werden.

Damit ist eine Möglichkeit angegeben, auf Antriebssteuerungseinrichtungen 16, 18 nur Software, nämlich z.B. einen Webserver 36, zu installieren und ablaufen zu lassen, welche für den Anwender notwendig ist. Dafür ist die Softwareschnittstelle 38 vorgesehen, die es zusammen mit einer für deren Bedienung erweiterten Basisfunktionalität 32 ermöglicht, spezifische Softwarebausteine, nämlich z.B. einen Webserver 36, zu laden und ablaufen zu lassen oder solche Funktionen auch zu entladen, d.h. zu deaktivieren.

Die damit verbundenen Vorteile liegen auf der Hand: Es wird Speicherplatz im Speicher 28 nur dann belegt, wenn tatsächlich ein Webserver 36 oder Ähnliches benötigt wird. Rechenleistung der jeweiligen Verarbeitungseinheit 26 wird von nachladbaren Softwarebausteinen auch nur dann benötigt, wenn sich diese im Speicher 28 befinden und aktiviert sind, also z.B. durch Anschluss an die Kommunikationsschnittstelle 30 und die Softwareschnittstelle 38. Die Softwarefunktionen des Webservers 36 können als eigenständiges Paket unabhängig von der Antriebssteuerungseinrichtung 16, 18 vermarktet, erstellt, modifiziert und gewartet werden. Eine Anpassung an die ständig fortschreitende Technik im sogenannten Web ist von der Weiterentwicklung der Antriebssteuerungseinrichtung 16, 18 unabhängig.

Die Softwareschnittstelle 38, die Basisfunktionalität 32 und die Kommunikationsschnittstelle 30 sind Elemente einer Antriebssteuerungseinrichtung 16, 18. Die Softwareschnittstelle 38 und deren Bedienbarkeit durch die Basisfunktionalität 32 einerseits, sowie die Kommunikationsschnittstelle 30 andererseits und schließlich die vom nachladbaren Webserver 36 umfassten Schnittstellen, nämlich die Ein- und Ausgangsschnittstelle 40, 42, sind Mittel zur Verwendung der Antriebssteuerungseinrichtung 16, 18 in dem hier beschriebenen Verfahren.

## Patentansprüche

1. Verfahren zum Betrieb einer Antriebssteuerungseinrichtung (16,18),
- wobei die Antriebssteuerungseinrichtung (16,18) zumindest einen Busanschluss und eine Kommunikationsschnittstelle (30) zum Anschluss an einen Bus (20) und zum Versenden und Empfangen von Daten über den Bus (20) umfasst,
- wobei die Antriebssteuerungseinrichtung (16,18) einen Speicher (28) umfasst, in den zumindest eine Basisfunktionalität (32) zumindest zur Steuerung und/oder Regelung eines angeschlossenen oder anschließbaren Motors (22,24) geladen ist,
- wobei die Antriebssteuerungseinrichtung (16,18) als Bestandteil der Basisfunktionalität (32) eine Softwareschnittstelle (38) umfasst,
- wobei im Betrieb der Antriebssteuerungseinrichtung (16, 18) in deren Speicher (28) die Funktionalität eines Webservers (36) geladen wird, der mit der Basisfunktionalität (32) über die Softwareschnittstelle (38) zusammenwirkt, und
- wobei über die Kommunikationsschnittstelle (30) eingehende Daten für den Webserver (36) zur Be- oder Verarbeitung an diesen weitergeleitet werden.

2. Verfahren nach Anspruch 1, wobei der Webserver (36) als nachladbare Funktionalität für die Antriebssteuerungseinrichtung (16,18) eine Eingangs- und eine Ausgangsschnittstelle (40,42) umfasst, wobei beim Laden des Webservers (36) in den Speicher (28) der Antriebssteuerungseinrichtung (16,18) die Eingangsschnittstelle (40) des Webservers (36) mit der Kommunikationsschnittstelle (30) der Antriebssteuerungseinrichtung (16,18) und die Ausgangsschnittstelle (42) des Webservers (36) mit der Softwareschnittstelle (38) der Antriebssteuerungseinrichtung (16,18) verbunden werden.

3. Verfahren nach Anspruch 2, wobei das Verbinden der Eingangsschnittstelle (40) mit der Kommunikationsschnittstelle (30) und/oder das Verbinden der Ausgangsschnittstelle (42) mit der Softwareschnittstelle (38) automatisch im Zusammenhang mit dem Laden des Webservers (36) in den Speicher (28) der Antriebssteuerungseinrichtung (16,18) erfolgt.

4. Verfahren nach Anspruch 2 oder 3, wobei über die Kommunikationsschnittstelle (30) eingehende Daten für den Webserver (36) an diesen über dessen Eingangsschnittstelle zur Be- oder Verarbeitung an diesen weitergeleitet werden und wobei der Webserver (36) über seine Ausgangsschnittstelle (42) bedarfsweise auf die Basisfunktionalität (32) der Antriebssteuerungseinrichtung (16,18) zugreift.

5. Verfahren nach einem der vorangehenden Ansprüche, wobei zum Deaktivieren eines in den Speicher (28) der Antriebssteuerungseinrichtung (16,18) geladenen Webservers (36) die Verbindung zwischen Eingangsschnittstelle (40) und Kommunikationsschnittstelle (30) einerseits und Ausgangsschnittstelle (42) und Softwareschnittstelle (38) andererseits getrennt wird und der vom Webserver (36) im Speicher (28) belegte Speicherplatz als verfügbar markiert wird.

6. Antriebssteuerungseinrichtung (16, 18) mit Mitteln zur Verwendung in einem Verfahren nach einem der Ansprüche 1 bis 5, wobei die Mittel
- einen Busanschluss und eine Kommunikationsschnittstelle (30) zum Anschluss an einen Bus (20) und zum Versenden und Empfangen von Daten über den Bus (20),
- einen Speicher (28) und eine in den Speicher (28) ladbare Basisfunktionalität (32) zumindest zur Steuerung und/oder Regelung eines anschließbaren Motors (22, 24) sowie
- als Bestandteil der Basisfunktionalität (32) eine Softwareschnittstelle (38), mittels derer die Funktionalität eines Webservers (36) nachladbar mit der Basisfunktionalität (32) kombinierbar ist,
umfassen.

7. Computerprogramm mit Programmcodemitteln zum Verbinden einer Eingangsschnittstelle (40) eines in einen Speicher (28) einer Antriebssteuerungseinrichtung (16,18) geladenen Webservers (36) mit einer Kommunikationsschnittstelle (30) der Antriebssteuerungseinrichtung (16,18) und zum Verbinden einer Ausgangsschnittstelle (42) des Webservers (36) mit einer Softwareschnittstelle (38) zu einer Basisfunktionalität (32) der Antriebssteuerungseinrichtung (16,18).

8. Computerprogramm nach Anspruch 7, mit Programmcodemitteln zur Be- oder Verarbeitung von für die Antriebssteuerungseinrichtung (16,18) über deren Kommunikationsschnittstelle (30) eingehenden und über die Eingangsschnittstelle (40) an den Webserver (36) weitergeleiteten Daten gemäß einer für den Webserver (36) bereitgestellten Webseite (46) unter Zugriff auf Daten der Antriebssteuerungseinrichtung (16,18) über die Ausgangsschnittstelle (42) des Webservers (36) und die Softwareschnittstelle (38) der Antriebssteuerungseinrichtung (16, 18).

9. Datenträger mit einem Computerprogramm mit durch einen nach einem der Ansprüche 7 oder 8.

10. Computerprogrammprodukt mit Programmcode-Mitteln, die auf einem computerlesbaren Datenträger gespeichert sind, um das Verfahren nach einem der Ansprüche 1 bis 5 durchzuführen, wenn das Computerprogrammprodukt in einen Speicher (28) einer Antriebssteuerungseinrichtung (16,18) geladen ist und auf der Antriebssteuerungseinrichtung (16,18)ausgeführt wird.

11. Digitales Speichermedium mit elektronisch auslesbaren Steuersignalen, die so mit einer Verarbeitungseinheit (26) einer Antriebssteuerungseinrichtung (16,18) zusammenwirken können, dass ein Verfahren nach einem der Ansprüche 1 bis 5 ausgeführt wird.
